# EUROPEAN PATENT SPECIFICATION

(11) **EP 4 604 494 B1**
(45) Date of publication and mention of the grant of the patent: **27.05.2026**
(21) Application number: 24158149.5
(22) Date of filing: 16.02.2024
(51) Int. Cl.: H04L 67/12, H04W 4/90

(54) **SYSTEM AND METHOD FOR INFORMING A SEARCH AND RESCUE TEAM**
SYSTEM UND VERFAHREN ZUM INFORMIEREN EINES SUCH- UND RETTUNGSTEAMS
SYSTÈME ET PROCÉDÉ POUR INFORMER UNE ÉQUIPE DE RECHERCHE ET DE SAUVETAGE

(43) Date of publication of application: 20.08.2025
(73) Proprietor: Rohde & Schwarz GmbH & Co. KG, 81671 München (DE)
(72) Inventor: Taga, Aziz, 81671 München (DE); Uhlmann, Maurice, 81671 München (DE); Oestreicher, Lars, 81671 München (DE)
(74) Representative: Novagraaf Group

(56) References cited:
- CN-B- 101 803 434
- CN-B- 106 557 124
- TW-A- 202 230 310

## Description

The invention relates to a system for informing a search and rescue team. Further, the invention relates to a method of informing a search and rescue team.

In case of catastrophes, for instance natural disasters like an earthquake or a flood or human made-catastrophes like chemical or nuclear leakage, human beings life is endangered. During these unlikely events, many people may be in a critical situation and require quick assistance, support or help.

Typically, search and rescue teams try to find the people endangered in order to rescue as many people as possible in shortest time. Usually, it is not possible for the search and rescue teams to obtain a quick overview of the entire situation, which however might be helpful for organizing the search and rescue in an efficient manner.

Accordingly, there is need for a system and a method that ensures efficient search and rescue of people in case of a catastrophe.

Patent application TW 202 230 310 A discloses a wireless positioning rescue system that includes a mobile communication device of a person waiting for rescue, an unmanned vehicle, as well as a search and rescue terminal. The unmanned vehicle is wirelessly connected to the mobile communication device of the person waiting for rescue.

The present invention provides a system for informing a search and rescue team. The system comprises at least one multicast core (MC core) and at least one multicast radio access network (MC RAN) that is connected with the at least one multicast core. The system also comprises at least one network interface that is connected to the at least one multicast core. Further, the system comprises at least one multicast channel via which the multicast radio access network multicasts a signal within a multicast network. The system also comprises at least one uplink channel. The at least one network interface is configured to forward emergency information to the at least one multicast core. The at least one multicast core is configured to control the at least one multicast radio access network to multicast a wake-up signal via the at least one multicast channel to the multicast network based upon the emergency information received via the at least one network interface. The at least one multicast core is configured to receive via the at least one uplink channel a response signal to the wake-up signal and to process information contained in the response signal to the at least one multicast core. The at least one multicast core is configured to receive via the at least one uplink channel several response signals to the wake-up signal multicasted and to collect the information contained in the several response signals. The at least one multicast core is also configured to generate data based on the information contained in the several response signals. The at least one multicast core is configured to forward the data generated to the search and rescue team.

The invention also provides a method of informing a search and rescue team. The method comprises the steps of:
- Forwarding via at least one network interface emergency information to at least one multicast core,
- Controlling, by the at least one multicast core, at least one multicast radio access network to multicast a wake-up signal via at least one multicast channel based upon the emergency information received via the at least one network interface,
- Receiving, by at least one multicast core, a response signal to the wake-up signal via at least one uplink channel, wherein the at least one multicast core receives via the at least one uplink channel several response signals to the wake-up signal multicasted and collects information contained in the several response signals,
- Processing, by the at least one multicast core, the information contained in the several response signals,
- Generating, by the at least one multicast core, data based on the information contained in the response signals, and
- Forwarding the date generated to the search and rescue team.

The main idea of the invention is to provide a system and method that assist search and rescue teams in case of emergency scenarios like catastrophes, wherein a multicast network is involved to gather information from people being endangered, e.g. potential victims. In fact, the information gathered is processed by the system, particularly the at least one multicast core, in order to generate data that is forwarded to the search and rescue team for assisting the search and rescue of the people endangered.

For instance, the response signal may be obtained from a user equipment, namely an internet of things (IoT) device that may submit information that can be processed in order to assist the search and rescue teams appropriately.

The multicast core may be a 5G core, e.g. a core that established a multicast network based on LTE or 5G New Radio.

The at least one multicast core and the at least one multicast radio access network may be located at a common site. Generally, the at least one multicast core and the at least one multicast radio access network are connected with each other in a bidirectional manner such that both components may communicate with each other. Put differently, the multicast core may forward information to be transmitted via the multicast radio access network, whereas the multicast radio access network receives information that is forwarded to the multicast core for further processing.

For instance, the data generated is forwarded to the search and rescue team via the multicast radio access network. Particularly, the multicast core controls the multicast radio access network accordingly.

The multicast radio access network may relate to a 5G, a single frequency network (SFN), a low power or a high power transmitter. In fact, the specific type of transmitter depends on the application scenario, for instance the location of the multicast radio access network.

The multicast core and the multicast radio access network ensure a more resilient and robust triggering compared to a cellular network, e.g. a group call. Moreover, availability can be ensured when using the multicast core and the multicast radio access network.

In a specific embodiment, the multicast core (MC core) and at least one multicast radio access network (MC RAN) are established by a broadcast core (BC core) and a broadcast radio access network (BC RAN). Then, the system comprises at least one broadcast channel via which the wake-up signal is broadcasted to participants of a broadcast network.

The network interface may relate to an interface usable by authorities solely. Hence, it is ensured that no third party is enabled to push emergency information into the system, which causes the multicast core (MC core) and the multicast radio access network (MC RAN) to multicast the wake-up signal.

An aspect provides that the system further comprises at least one user equipment (UE) being part of the multicast network. The at least one user equipment is configured to receive the wake-up signal from the multicast radio access network. The at least one user equipment is further configured to transmit the response signal via the at least one uplink channel. Accordingly, the at least one user equipment receives the wake-up signal from the multicast radio access network, wherein the at least one user equipment transmits the response signal via the at least one uplink channel. The at least one user equipment may comprise a multicast receiver in order to be enabled to receive the wake-up signal multi-casted by the multicast radio access network.

For instance, the user equipment is a device having a certain intelligence and/or connectivity, e.g. computational power, which makes the user equipment an internet of things (IoT) device. For instance, the user equipment may be a smart swatch, a smart phone or any other suitable IoT user equipment.

The at least one user equipment may receive the wake-up signal directly. The response signal may be transmitted via a hub, e.g. an loT hub. For instance, another loT device may act as loT hub, particularly in case no response signal has to be sent by the loT device acting as loT hub.

Another aspect provides that the at least one user equipment is configured to respond data that is indicative of position, health state, and/or environmental data, for instance temperature, humidity, brightness, wind speed, and/or air pressure. The respective data transmitted may relate to metadata. The data transmitted may relate to Key Performance Indicators (KPIs). The data indicative of position may relate to positioning, navigation and timing data (PNT data). The data indicative of position may comprise the recently stored position in case no new position/location can be found by the user equipment.

Besides the data indicative of position, health state, and/or environmental data, additional data may be transmitted, for instance video data and/or text data.

Generally, a subcarrier spacing of 3.75 kHz may be ensured by the user equipment when transmitting the response signal via the at least one uplink channel, thereby ensuring no interference of the data transmitted.

According to an aspect, the system comprises a radio receiver, in particular a narrowband loT receiver. The radio receiver ensures that the system is enabled to receive the response signal transmitted via the uplink channel in case of a radio signal. The at least one uplink channel may relate to a radio channel accordingly.

Generally, the response signal may be received by the at least one multicast radio access network. The at least one multicast radio access network may comprise the radio receiver.

Alternatively, a separately formed receiver for the response signal is provided, which is connected to the multicast core for receiving the response signal and forwarding the information contained in the response signal to the multicast core.

For instance, the at least one uplink channel is not part of the multicast network. In other words, the at least one uplink channel is established separately with respect to the multicast network. The multicast channel relates to a unidirectional channel via which only signals can be transmitted from the multicast radio access network to participants of the multicast network like the user equipment. The user equipments however may establish uplink channels, for instance radio channels, via which the at least one response signal is transmitted.

Actually, the multicast network may comprise the at least one multicast core, the multicast radio access network, at least one antenna system associated with the multicast radio access network, the multicast channel as well as the user equipment, namely the loT devices.

Optionally, the search and rescue team, which receives the data generated, may also be part of the multicast network, particularly communication devices used by the search and rescue team, which receive the data forwarded by the at least one multicast core.

As indicated above, the at least one uplink channel however is not part of the multicast network, but part of a different network, e.g. a radio network.

Additionally or alternatively, the at least one uplink channel is part of a ultra wide band (UWB) network, a mobile cellular network, a satellite communication, a narrowband loT communication, or a Wi-Fi communication. Thus, the uplink channel may relate to a network/communication technique that ensures bidirectional communication. The downlink channel associated with the respective network/communication system is however different to the multicast channel and not used for forwarding the wake-up signal.

Moreover, the at least one multicast core is configured to receive via the at least one uplink channel several response signals to the wake-up signal multi-casted. The at least one multicast core is configured to collect the information contained in the several response signals. Since the wake-up signal is multi-casted, several user equipments may receive the wake-up signal and may respond to the wake-up signal by means of a respective response signal. Accordingly, several response signals may be received such that information of several response signals is gathered that has to be processed by the multicast core accordingly.

Another aspect provides that the data generated based on the information contained in the response signal comprise information for guidance, prioritization and/or accelerating search and rescue. For instance, information about a health status is indicated on a map in a colored manner. The guidance may be improved in case the response signal obtained from the user equipment, particularly the information contained in the response signal, comprises information about a position. Based on this information, the search and rescue team may be guided to the user equipment and the person having/carrying the user equipment. Further, the information may comprise health status such that this information may be used for prioritization, as people in bad conditions are rescued prior to people being not injured or in a life-threatening situation, e.g. in better conditions. For this prioritization, the environmental data may also be taken into account, as the person may be in good condition, but in a very severe situation due to the environment. Consequently, the search and rescue can be improved due to the guidance and prioritization obtained based on the information gathered from the response signals received.

According to a specific embodiment, the data generated relates to map data that can be displayed in order to assist the search and rescue team. In fact, a map may be displayed that has colored positions, wherein the respective colors are indicative of a health status of a person. The respective user equipment has transmitted the response signal containing the information about the health status. Based on the map, the search and rescue team gets information about the health status and the position of the people endangered simultaneously. Therefore, the search and rescue can be accelerated, as groups of people being located in close proximity can be rescued first provided that their health status is worse compared to other people endangered. If a group of people is in relatively good condition, other people may be rescued previously even though they are located isolated. Consequently, the number of people, their health status and/or the environmental conditions may be considered accordingly.

The system may be configured to select a network available via which the data generated is forward to the search and rescue team. Accordingly, the system has access to several different kinds of networks for forwarding the data to the search and rescue team. Since some networks may be affected by the catastrophe, the system is enabled to select an available network from several different networks, for instance a multicast network, a satellite network or a cellular network.

As mentioned above, the multicast radio access network may also be used for forwarding the data generated to the search and rescue team.

Furthermore, the at least one multicast core is configured to process additional data received from other data sources. The additional data and the information contained in the response signal are processed together in order to generate the data to be forwarded to the search and rescue team. Besides the information obtained from the user equipments, other data sources may also be taken into account in order to assist the search and rescue team in a most appropriate way. For instance, information of cameras showing a scene may be taken into account in order to get a better understanding of the present situation. The additional data may be used for categorizing the kind of catastrophe. Depending on the content of the additional data taken into account, the data generated may be different, which is forwarded to the search and rescue team.

The additional data may be forwarded to the multicast core via the network interface, for instance by an authority or a company running surveillance cameras or the like.

Depending on the additional data forwarded, the search and rescue teams may be informed in certain areas that are affected by the emergency.

The additional data may also be used to obtain information about people without user equipment, e.g. people without loT device, or without working uplink channel, for instance due to the emergency scenario or the catastrophe occurred. For instance, information is gathered from the additional data that a certain number of people are (presumably) located in a certain area even though only a lower number of response signals is received. Therefore, it can be ensured that as much information as possible is gathered and used for informing the search and rescue team about the actual situation.

The additional data may comprise video data obtained from a video surveillance. Alternatively or additionally, the additional data may relate to log data of people generated when the people enter a certain building while using a digital/electronic key like a key card or a chip.

The system may also comprise a processing circuit that is configured to analyze the information contained in the response signal. Particularly, the processing circuit is configured to apply an artificial intelligence method when analyzing the information contained in the response signal. The processing circuit may be part of the multicast core. Alternatively, the multicast core may interact with the processing circuit.

For instance, information is added by the processing circuit, particularly the artificial intelligence method applied, which is not encompassed by the information contained in the response signal(s). The artificial intelligence may be a generative artificial intelligence. Hence, the processing circuit, e.g. the artificial intelligence, may add/predict additional information based on the information received from different response signals. For instance, information like the health status of a certain group of people is received via the response signal, wherein the artificial intelligence may process the information in order to predict the health status for other people, e.g. people not in the certain group.

Generally, the processing circuit may be configured to analyze the information contained in the response signal and the additional data. Thus, correlations between the information and the additional data may be detected, particularly when applying artificial intelligence methods on all data/information gathered by the multicast core.

The processing circuit may process the information and/or the additional data in order to predict presence of people in affected areas, which do not have a user equipment or a working uplink channel. Thus, presence of people may be predicted when no uplink channel is available.

The system may comprise at least one flying object that is configured to receive the response signal and/or to forward the response signal to the at least one multicast core. The at least one flying object may forward the response signal via at least one intermediate device to the at least one multicast core. Hence, the response signal is indirectly forwarded to the at least one multicast core. If possible, the at least one flying object may also directly forward the response signal to the at least one multicast core, namely without any intermediate device. The flying object may relate to an unmanned aerial vehicle (UAV). The at least one flying object may be used to gather information from areas that cannot be accessed by land, for instance due to the catastrophe that took place. Generally, the flying object may relate to a repeater or an loT hub, which ensures that the response signal transmitted by the user equipment is received by the at least one multicast radio access network. For instance, ultra wide band (UWB) signals or other radio signals may be harvested by the flying object.

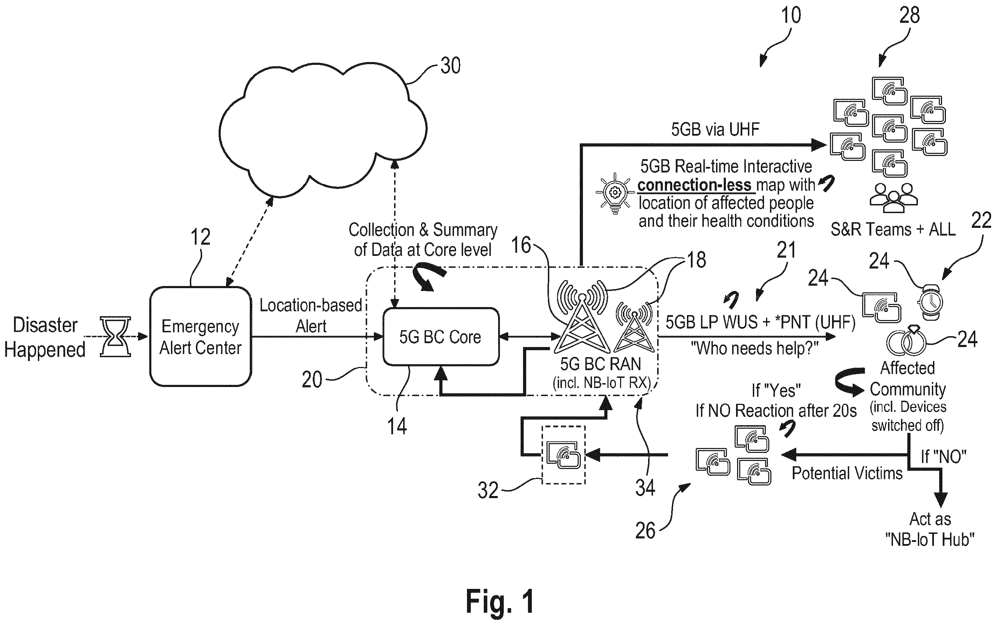

The foregoing aspects and many of the attendant advantages of the claimed subject matter will become more readily appreciated as the same become better understood by reference to the following detailed description, when taken in conjunction with the accompanying drawings, wherein Figure 1 schematically shows an overview of a system for informing a search and rescue team according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

In Figure 1, a system 10 for informing a search and rescue team is shown.

The system comprises at least one network interface 12, for instance an emergency alert center that receives emergency information about a catastrophe/disaster that has happened. The emergency information may be inputted by an authority.

The network interface 12 is connected to a multicast core 14, for instance a multicast core 14 that is located in a certain area. Thus, the network interface 12 may forward emergency information to the at least one multicast core 14 based on the location of the multicast core 14. In other words, a location-based alert is forwarded via the network interface 12 to the multicast core 14.

The multicast core 14 is connected to a multicast radio access network 16 that may comprise several antenna systems 18 for communication purposes.

In the shown embodiment, the multicast core 14 is a broadcast core and the multicast radio access network 16 is a broadcast radio access network.

The multicast core 14 and the multicast radio access network 16 may be located at a common site 20, wherein the multicast core 14 and the multicast radio access network 16 may generally communicate with each other in a bidirectional manner.

The multicast core 14 upon receiving the emergency information from the network interface 12 controls the multicast radio access network 16 to multicast a wake-up signal via a multicast channel 21 to a multicast network 22 that comprises several different user equipments 24, for instance a smart phone, a smart watch or other internet of thing devices (IoT devices).

The wake-up signal may force the respective user equipment 24 to process the wake-up signal that may contain an enquiry, for instance the question "Who needs help?".

The respective user equipments 24 that receive the wake-up signal multi-casted process the respective wake-up signal. Depending on the respective circumstances, the user equipment 24 may relate to a user equipment that is affected by the emergency such that the user equipment 24 transmits a response signal via an uplink channel 26 that may relate to a radio channel. In any case, the uplink channel 26 is different to the multicast channel 21 via which the wake-up signal was multi-casted.

The user equipments 24 also send a response signal in case no reaction of the user equipment 24 takes place within a predefined time span, for instance 20 seconds.

In case the user equipment 24 processing the wake-up signal arrives at the conclusion that the user equipment 24, particularly the person having the user equipment 24, is not affected by the emergency, the user equipment 24 may act as an loT hub for other devices.

Accordingly, the user equipment 24 my directly transmit the response signal or indirectly, particularly via loT hubs.

In any case, the multicast core 14 receives at least one response signal via the at least one uplink channel 26, particularly several response signals from different user equipments 24.

The multicast core 14 processes the information contained in the at least one response signal and generates data based on the information contained in the at least one response signal.

Afterwards, the data generated is forwarded to a search and rescue team 28, for instance via the multicast radio access network 16.

In general, the system 10 is enabled to select an available network via which the data generated is forwarded to the search and rescue teams 28 in order to ensure the search and rescue teams 28 are informed appropriately. Consequently, one of the several antenna systems 18 may be used for forwarding the data generated to the search and rescue teams.

The data generated may comprise information for guidance, prioritization and/or accelerating the search and rescue. For instance, information about a health status of people involved is indicated on a map in a colored manner. Thus, the search and rescue teams 28 are informed about the position/location of the people involved as well as their current health status on a single map which assists the search and rescue teams 28 for their respective operations.

This is possible since the user equipments 24 communicate via the at least one uplink channel 26 respective information, e.g. data that is indicative of position, health state, and/or environmental data, for instance temperature, humidity, brightness, wind speed, and/or air pressure. Based on this data, the multicast core 14 is enabled to generate data for the search and rescue teams 28 that improves the search and rescue.

When generating the data to be transmitted to the search and rescue teams 28, the multicast core 14 may also process additional data received from other data sources, for instance via the network interface 12. The additional data may comprise video footage or other information about the catastrophe. Based on the additional data, the search and rescue teams 28 can be informed in a more detailed manner, as additional information is forwarded concerning the catastrophe, for instance its extent.

The multicast core 14 may comprise or interact with a processing circuit 30 that analyzes the information contained in the response signal, particularly the information contained in the response signal and the additional data received. The processing circuit 30 may be configured to apply an artificial intelligence method in order to analyze the information contained in the response signal and/or the additional data in order to find correlations in the data processed.

The processing circuit 30, e.g. the artificial intelligence executed on the processing circuit 30, is enabled to include additional information when analyzing the information contained in the response signal(s) and/or the additional data received from other data sources. In fact, the artificial intelligence may relate to a generative artificial intelligence. For instance, additional information like health status of people is predicted by the processing circuit 30, particularly the (generative) artificial intelligence executed on the processing circuit 30. The additional information is predicted in case the information contained in the response signal(s) and/or the additional data received from the other data sources do not provide this kind of additional information, e.g. the health status. Consequently, the processing circuit 30, particularly the (generative) artificial intelligence, enriches the data/information already gathered by the response signal(s) and/or the additional data received.

As illustrated in Figure 1, the processing circuit 30 may be located externally with respect to the at least one multicast core 14, e.g. as a superordinate layer like a cloud layer. Consequently, a communication link is established between the processing circuit 30 and the at least one multicast core 14.

The processing circuit 30 may however also interact with other components of the system 10, for instance the emergency alert center 12.

In an alternative, the processing circuit 30 may also be located at the site of the at least one multicast core 14. Consequently, the at least one multicast core 14 may comprise the processing circuit 30. This ensures that the processing circuit 30 is still operable as long as the at least one multicast core 14 works. In other words, an existing and still working communication link between the processing circuit 30 and the at least one multicast core 14 would not be required.

Accordingly, the overall data/information used for generating the data to be forwarded to the search and rescue teams is enriched by means of the processing circuit 30, particularly the (generative) artificial intelligence executed on the processing circuit 30.

The at least one uplink channel may be established as a radio channel. Hence, radio signals are forwarded from the user equipments 24.

Generally, the multicast network 22 comprises the at least one multicast core 14, the multicast radio access network 16, at least one of the antenna systems 18, the multicast channel 21 as well as the user equipment 24, namely the loT devices.

The search and rescue team 28 may optionally be part of the multicast network 22 as well, particularly communication devices of the search and rescue team 28.

The system 10 may comprise at least one flying object 32 that may relate to an unmanned aerial vehicle (UAV), which may act as a repeater or rather loT hub for the user equipments 24, particularly the response signals transmitted. The flying object 32 is used to receive the response signal and/or to forward the response signal to the at least one multicast core 14. Hence, areas can be accessed that have been destroyed or destructed by the catastrophe.

Generally, the multicast radio access network 16 may receive the response signals via the at least one uplink channel 26, wherein the information contained in the response signal is gathered by the multicast radio access network 16 and forwarded to the multicast core 14 for further processing.

However, the response signal(s) may also be received by a separately formed receiver 34, for instance a radio receiver, e.g. a narrowband IoT receiver. Hence, a different antenna system 18 of the several antenna systems 18 may be used for receiving the response signal(s) via the at least one uplink channel 26.

Irrespective thereof, it is ensured that the information of response signal(s) is received by the multicast core 14 that processed the information in order to generate the data for the search and rescue teams 28.

The respective data may be forwarded to the search and rescue teams 28 in real-time. Hence, a connection-less map may be generated based on the data forwarded to the search and rescue teams 28, wherein locations/positions of affected people together with their health status are displayed.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A system (10) for informing a search and rescue team (28), wherein the system (10) comprises at least one multicast core (14) and at least one multicast radio access network (16) connected with the at least one multicast core (14), wherein the system (10) comprises at least one network interface (12) connected to the at least one multicast core (14), wherein the system (10) comprises at least one multicast channel (21) via which the multicast radio access network (16) multicasts a signal within a multicast network (22), wherein the system (10) comprises at least one uplink channel (26), wherein the at least one network interface (12) is configured to forward emergency information to the at least one multicast core (14), wherein the at least one multicast core (14) is configured to control the at least one multicast radio access network (16) to multicast a wake-up signal via the at least one multicast channel (21) of the multicast network (22) based upon the emergency information received via the at least one network interface (12), wherein the at least one multicast core (14) is configured to receive via the at least one uplink channel (26) a response signal to the wake-up signal and to process information contained in the response signal, wherein the at least one multicast core (14) is configured to receive via the at least one uplink channel (26) several response signals to the wake-up signal multicasted and to collect the information contained in the several response signals, wherein the at least one multicast core (14) is configured to generate data based on the information contained in the several response signals, and wherein the at least one multicast core (14) is configured to forward the data generated to the search and rescue team (28).

2. The system (10) according to claim 1, wherein the system (10) further comprises at least one user equipment (24) being part of the multicast network (22), wherein the at least one user equipment (24) is configured to receive the wake-up signal from the multicast radio access network (16), and wherein the at least one user equipment (24) is configured to transmit the response signal via the at least one uplink channel (26).

3. The system (10) according to claim 2, wherein the at least one user equipment (24) is configured to respond data that is indicative of position, health state, and/or environmental data.

4. The system (10) according to any one of the preceding claims, wherein the system (10) comprises a radio receiver (34), in particular a narrowband loT receiver.

5. The system (10) according to any one of the preceding claims, wherein the at least one uplink channel (26) is not part of the multicast network (22) and/or wherein the at least one uplink channel (26) is part of a ultra wide band network, a mobile cellular network, a satellite communication, a narrowband loT communication, or a Wi-Fi communication.

6. The system (10) according to any one of the preceding claims, wherein the data generated based on the information contained in the response signals comprises information for guidance, prioritization and/or accelerating search and rescue, in particular wherein information about a health status is indicated on a map in a colored manner.

7. The system (10) according to any one of the preceding claims, wherein the system (10) is configured to select a network available via which the data generated is forwarded to the search and rescue team (28).

8. The system (10) according to any one of the preceding claims, wherein the at least one multicast core (14) is configured to process additional data received from other data sources, wherein the additional data and the information contained in the response signals are processed together in order to generate the data to be forwarded to the search and rescue team (28).

9. The system (10) according to any one of the preceding claims, wherein the system (10) comprises a processing circuit (30) that is configured to analyze the information contained in the response signal, in particular wherein the processing circuit (30) is configured to apply an artificial intelligence method when analyzing the information contained in the response signal.

10. The system (10) according to any of the preceding claims, wherein the system (10) comprises at least one flying object (32) that is configured to receive the response signal and/or to forward the response signal to the at least one multicast core (14).

11. A method of informing a search and rescue team (28), wherein the method comprises the steps of:
- Forwarding via at least one network interface (12) emergency information to at least one multicast core (14),
- Controlling, by the at least one multicast core (14), at least one multicast radio access network (16) to multicast a wake-up signal via at least one multicast channel (21) based upon the emergency information received via the at least one network interface (12),
- Receiving, by at least one multicast core (14), a response signal to the wake-up signal via at least one uplink channel (26), wherein the at least one multicast core (14) receives via the at least one uplink channel (26) several response signals to the wake-up signal multicasted and collects information contained in the several response signals,
- Processing, by the at least one multicast core (14), the information contained in the several response signals,
- Generating, by the at least one multicast core (14), data based on the information contained in the response signals, and
- Forwarding the data generated to the search and rescue team (28).

12. The method according to claim 11, wherein at least one user equipment (24) receives the wake-up signal from the multicast radio access network (16), and wherein the at least one user equipment (24) transmits the response signal via the at least one uplink channel (26).

13. The method according to any of claims 11 to 12, wherein the at least one multicast core (14) processes additional data received from other data sources, wherein the additional data and the information contained in the response signals are processed together in order to generate the data to be forwarded to the search and rescue team (28).

## Patentansprüche

1. System (10) zum Informieren eines Such- und Rettungsteams (28), wobei das System (10) mindestens einen Multicast-Kern (14) und mindestens ein Multicast-Funkzugangsnetz (16), das mit dem mindestens einen Multicast-Kern (14) verbunden ist, umfasst, wobei das System (10) mindestens eine Netzschnittstelle (12), die mit dem mindestens einen Multicast-Kern (14) verbunden ist, umfasst, wobei das System (10) mindestens einen Multicast-Kanal (21), über den das Multicast-Funkzugangsnetz (16) ein Signal innerhalb eines Multicast-Netzes (22) per Multicast sendet, umfasst, wobei das System (10) mindestens einen Uplink-Kanal (26) umfasst, wobei die mindestens eine Netzschnittstelle (12) konfiguriert ist, um Notfallinformationen an den mindestens einen Multicast-Kern (14) weiterzuleiten, wobei der mindestens eine Multicast-Kern (14) konfiguriert ist, um das mindestens eine Multicast-Funkzugangsnetz (16) zu steuern, um ein Wecksignal über den mindestens einen Multicast-Kanal (21) des Multicast-Netzes (22) basierend auf den Notfallinformationen, die über die mindestens eine Netzschnittstelle (12) empfangen werden, per Multicast zu senden, wobei der mindestens eine Multicast-Kern (14) konfiguriert ist, um über den mindestens einen Uplink-Kanal (26) ein Antwortsignal auf das Wecksignal zu empfangen und Informationen, die in dem Antwortsignal enthalten sind, zu verarbeiten, wobei der mindestens eine Multicast-Kern (14) konfiguriert ist, um über den mindestens einen Uplink-Kanal (26) mehrere Antwortsignale auf das Wecksignal, das per Multicast gesendet wird, zu empfangen, und die Informationen, die in den mehreren Antwortsignalen enthalten sind, zu sammeln, wobei der mindestens eine Multicast-Kern (14) konfiguriert ist, um Daten basierend auf den Informationen, die in den mehreren Antwortsignalen enthalten sind, zu erzeugen, und wobei der mindestens eine Multicast-Kern (14) konfiguriert ist, um die Daten, die erzeugt werden, an das Such- und Rettungsteam (28) weiterzuleiten.

2. System (10) nach Anspruch 1, wobei das System (10) ferner mindestens eine Benutzereinrichtung (24), die ein Teil des Multicast-Netzes (22) ist, umfasst, wobei die mindestens eine Benutzereinrichtung (24) konfiguriert ist, um das Wecksignal von dem Multicast-Funkzugangsnetz (16) zu empfangen, und wobei die mindestens eine Benutzereinrichtung (24) konfiguriert ist, um das Antwortsignal über den mindestens einen Uplink-Kanal (26) zu übertragen.

3. System (10) nach Anspruch 2, wobei die mindestens eine Benutzereinrichtung (24) konfiguriert ist, um Daten, die Positions-, Gesundheitszustands- und/oder Umgebungsdaten anzeigen, zu antworten.

4. System (10) nach einem der vorstehenden Ansprüche, wobei das System (10) einen Funkempfänger (34) umfasst, insbesondere einen Schmalband-IdD-Empfänger.

5. System (10) nach einem der vorstehenden Ansprüche, wobei der mindestens eine Uplink-Kanal (26) nicht ein Teil des Multicast-Netzes (22) ist und/oder wobei der mindestens eine Uplink-Kanal (26) ein Teil eines Ultrabreitbandnetzes, eines mobilen Zellularnetzes, einer Satellitenkommunikation, einer Schmalband-IdD-Kommunikation oder einer WLAN-Kommunikation ist.

6. System (10) nach einem der vorstehenden Ansprüche, wobei die Daten, die basierend auf den Informationen, die in den Antwortsignalen enthalten sind, erzeugt werden, Informationen für eine Führung, eine Priorisierung und/oder ein Beschleunigen der Such- und Rettungsaktion umfassen, insbesondere wobei Informationen über einen Gesundheitszustand auf einer Karte farblich angezeigt werden.

7. System (10) nach einem der vorstehenden Ansprüche, wobei das System (10) konfiguriert ist, um ein verfügbares Netz auszuwählen, über das die erzeugten Daten an das Such- und Rettungsteam (28) weitergeleitet werden.

8. System (10) nach einem der vorstehenden Ansprüche, wobei der mindestens eine Multicast-Kern (14) konfiguriert ist, um zusätzliche Daten, die von anderen Datenquellen empfangen werden, zu verarbeiten, wobei die zusätzlichen Daten und die Informationen, die in den Antwortsignalen enthalten sind, zusammen verarbeitet werden, um die Daten, die an das Such- und Rettungsteam (28) weiterzuleiten sind, zu erzeugen.

9. System (10) nach einem der vorstehenden Ansprüche, wobei das System (10) eine Verarbeitungsschaltung (30), die konfiguriert ist, um die Informationen, die in dem Antwortsignal enthalten sind, zu analysieren, umfasst, insbesondere wobei die Verarbeitungsschaltung (30) konfiguriert ist, um ein Verfahren der künstlichen Intelligenz anzuwenden, wenn die Informationen, die in dem Antwortsignal enthalten sind, analysiert werden.

10. System (10) nach einem der vorstehenden Ansprüche, wobei das System (10) mindestens ein fliegendes Objekt (32), das konfiguriert ist, um das Antwortsignal zu empfangen und/oder das Antwortsignal an den mindestens einen Multicast-Kern (14) weiterzuleiten, umfasst.

11. Verfahren zum Informieren eines Such- und Rettungsteams (28), wobei das Verfahren die Schritte umfasst:
- Weiterleiten, über mindestens eine Netzschnittstelle (12), der Notfallinformationen an mindestens einen Multicast-Kern (14),
- Steuern, durch den mindestens einen Multicast-Kern (14), mindestens eines Multicast-Funkzugangsnetzes (16), um ein Wecksignal über mindestens einen Multicast-Kanal (21) basierend auf den Notfallinformationen, die über die mindestens eine Netzschnittstelle (12) empfangen werden, per Multicast zu senden,
- Empfangen, durch mindestens einen Multicast-Kern (14), eines Antwortsignals auf das Wecksignal über mindestens einen Uplink-Kanal (26), wobei der mindestens eine Multicast-Kern (14) über den mindestens einen Uplink-Kanal (26) mehrere Antwortsignale auf das per Multicast gesendete Wecksignal empfängt und Informationen, die in den mehreren Antwortsignalen enthalten sind, sammelt,
- Verarbeiten, durch den mindestens einen Multicast-Kern (14), der Informationen, die in den mehreren Antwortsignalen enthalten sind,
- Erzeugen, durch den mindestens einen Multicast-Kern (14), der Daten basierend auf den Informationen, die in den Antwortsignalen enthalten sind, und
- Weiterleiten der erzeugten Daten an das Such- und Rettungsteam (28).

12. Verfahren nach Anspruch 11, wobei mindestens eine Benutzereinrichtung (24) das Wecksignal von dem Multicast-Funkzugangsnetz (16) empfängt und wobei die mindestens eine Benutzereinrichtung (24) das Antwortsignal über den mindestens einen Uplink-Kanal (26) überträgt.

13. Verfahren nach einem der Ansprüche 11 bis 12, wobei der mindestens eine Multicast-Kern (14) zusätzliche Daten, die von anderen Datenquellen empfangen werden, verarbeitet, wobei die zusätzlichen Daten und die Informationen, die in den Antwortsignalen enthalten sind, zusammen verarbeitet werden, um die Daten zu erzeugen, die an das Such- und Rettungsteam (28) weiterzuleiten sind.

## Revendications

1. Système (10) permettant d'informer une équipe de recherche et de sauvetage (28), dans lequel le système (10) comprend au moins un cœur de multidiffusion (14) et au moins un réseau d'accès radio de multidiffusion (16) connecté à l'au moins un cœur de multidiffusion (14), dans lequel le système (10) comprend au moins une interface réseau (12) connectée à l'au moins un cœur de multidiffusion (14), dans lequel le système (10) comprend au moins un canal de multidiffusion (21) par l'intermédiaire duquel le réseau d'accès radio de multidiffusion (16) effectue une multidiffusion d'un signal au sein d'un réseau de multidiffusion (22), dans lequel le système (10) comprend au moins un canal de liaison montante (26), dans lequel l'au moins une interface réseau (12) est configurée pour acheminer des informations d'urgence à l'au moins un cœur de multidiffusion (14), dans lequel l'au moins un cœur de multidiffusion (14) est configuré pour commander l'au moins un réseau d'accès radio de multidiffusion (16) pour effectuer une multidiffusion d'un signal de réveil par l'intermédiaire de l'au moins un canal de multidiffusion (21) du réseau de multidiffusion (22) en fonction des informations d'urgence reçues par l'intermédiaire de l'au moins une interface réseau (12), dans lequel l'au moins un cœur de multidiffusion (14) est configuré pour recevoir par l'intermédiaire de l'au moins un canal de liaison montante (26) un signal de réponse au signal de réveil et pour traiter les informations contenues dans le signal de réponse, dans lequel l'au moins un cœur de multidiffusion (14) est configuré pour recevoir par l'intermédiaire de l'au moins un canal de liaison montante (26) plusieurs signaux de réponse au signal de réveil multidiffusé et pour collecter les informations contenues dans les multiples signaux de réponse, dans lequel l'au moins un cœur de multidiffusion (14) est configuré pour générer des données en fonction des informations contenues dans les multiples signaux de réponse, et dans lequel l'au moins un cœur de multidiffusion (14) est configuré pour acheminer les données générées à l'équipe de recherche et de sauvetage (28).

2. Système (10) selon la revendication 1, dans lequel le système (10) comprend en outre au moins un équipement utilisateur (24) faisant partie du réseau de multidiffusion (22), dans lequel l'au moins un équipement utilisateur (24) est configuré pour recevoir le signal de réveil en provenance du réseau d'accès radio de multidiffusion (16), et dans lequel l'au moins un équipement utilisateur (24) est configuré pour transmettre le signal de réponse par l'intermédiaire de l'au moins un canal de liaison montante (26).

3. Système (10) selon la revendication 2, dans lequel l'au moins un équipement utilisateur (24) est configuré pour répondre à des données qui indiquent une position, un état de santé et/ou des données environnementales.

4. Système (10) selon l'une quelconque des revendications précédentes, dans lequel le système (10) comprend un récepteur radio (34), en particulier un récepteur loT à bande étroite.

5. Système (10) selon l'une quelconque des revendications précédentes, dans lequel l'au moins un canal de liaison montante (26) ne fait pas partie du réseau de multidiffusion (22) et/ou dans lequel l'au moins un canal de liaison montante (26) fait partie d'un réseau à bande ultra-large, d'un réseau cellulaire mobile, d'une communication par satellite, d'une communication loT à bande étroite, ou d'une communication Wi-Fi.

6. Système (10) selon l'une quelconque des revendications précédentes, dans lequel les données générées en fonction des informations contenues dans les signaux de réponse comprennent des informations permettant de guider, de prioriser et/ou d'accélérer une recherche et un sauvetage, en particulier dans lequel des informations concernant un état de santé sont indiquées sur une carte d'une manière colorée.

7. Système (10) selon l'une quelconque des revendications précédentes, dans lequel le système (10) est configuré pour sélectionner un réseau disponible par l'intermédiaire duquel les données générées sont acheminées à l'équipe de recherche et de sauvetage (28).

8. Système (10) selon l'une quelconque des revendications précédentes, dans lequel l'au moins un cœur de multidiffusion (14) est configuré pour traiter des données supplémentaires reçues en provenance d'autres sources de données, dans lequel les données supplémentaires et les informations contenues dans les signaux de réponse sont traitées ensemble afin de générer les données à acheminer à l'équipe de recherche et de sauvetage (28).

9. Système (10) selon l'une quelconque des revendications précédentes, dans lequel le système (10) comprend un circuit de traitement (30) qui est configuré pour analyser les informations contenues dans le signal de réponse, en particulier dans lequel le circuit de traitement (30) est configuré pour appliquer un procédé d'intelligence artificielle lors de l'analyse des informations contenues dans le signal de réponse.

10. Système (10) selon l'une quelconque des revendications précédentes, dans lequel le système (10) comprend au moins un engin volant (32) qui est configuré pour recevoir le signal de réponse et/ou pour acheminer le signal de réponse à l'au moins un cœur de multidiffusion (14).

11. Procédé consistant à informer une équipe de recherche et de sauvetage (28), dans lequel le procédé comprend les étapes consistant à :
- acheminer par l'intermédiaire d'au moins une interface réseau (12) des informations d'urgence à au moins un cœur de multidiffusion (14),
- commander, par l'au moins un cœur de multidiffusion (14), au moins un réseau d'accès radio de multidiffusion (16) pour effectuer une multidiffusion d'un signal de réveil par l'intermédiaire d'au moins un canal de multidiffusion (21) en fonction des informations d'urgence reçues par l'intermédiaire de l'au moins une interface réseau (12),
- recevoir, par au moins un cœur de multidiffusion (14), un signal de réponse au signal de réveil par l'intermédiaire d'au moins un canal de liaison montante (26), dans lequel l'au moins un cœur de multidiffusion (14) reçoit par l'intermédiaire de l'au moins un canal de liaison montante (26) plusieurs signaux de réponse au signal de réveil multidiffusé et collecte des informations contenues dans les multiples signaux de réponse,
- traiter, par l'au moins un cœur de multidiffusion (14), les informations contenues dans les multiples signaux de réponse,
- générer, par l'au moins un cœur de multidiffusion (14), des données en fonction des informations contenues dans les signaux de réponse, et
- acheminer les données générées à l'équipe de recherche et de sauvetage (28).

12. Procédé selon la revendication 11, dans lequel au moins un équipement utilisateur (24) reçoit le signal de réveil en provenance du réseau d'accès radio de multidiffusion (16), et dans lequel l'au moins un équipement utilisateur (24) transmet le signal de réponse par l'intermédiaire de l'au moins un canal de liaison montante (26).

13. Procédé selon l'une quelconque des revendications 11 à 12, dans lequel l'au moins un cœur de multidiffusion (14) traite des données supplémentaires reçues en provenance d'autres sources de données, dans lequel les données supplémentaires et les informations contenues dans les signaux de réponse sont traitées ensemble afin de générer les données à acheminer à l'équipe de recherche et de sauvetage (28).
